# EUROPEAN PATENT SPECIFICATION

(11) **EP 3 596 726 B1**
(45) Date of publication and mention of the grant of the patent: **14.02.2024**
(21) Application number: 18715397.8
(22) Date of filing: 15.03.2018
(51) Int. Cl.: G10L 15/22, G10L 17/00, G06F 21/32

(54) **A WIRELESS EVENT NOTIFICATION SYSTEM WITH VOICE-BASED INTERACTION**
SYSTEM ZUR MELDUNG VON DRAHTLOSEREIGNISSEN MIT SPRACHBASIERTER INTERAKTION
SYSTÈME DE NOTIFICATION D'ÉVÉNEMENT SANS FIL À INTERACTION VOCALE

(30) Priority: 15.03.2017 US 201762471438 P
(43) Date of publication of application: 22.01.2020
(73) Proprietor: Carrier Corporation, Jupiter, FL 33478 (US)
(72) Inventor: ORELLANA, Pedro Fernandez, Penrose Wharf Cork (IE); TIWARI, Ankit, East Hartfod Connecticut 06118 (US); CAMPANA, Daniele, Penrose Wharf Cork (IE); POY, Hector Moner, Penrose Wharf Cork (IE)
(74) Representative: Dehns
(86) International application number: PCT/US2018/022570
(87) International publication number: WO 2018/170221

(56) References cited:
- US-A1- 2003 185 358
- US-A1- 2004 128 131
- US-A1- 2015 302 857
- US-B1- 7 529 677

## Description

### BACKGROUND

The present disclosure relates to a wireless event notification system and, more particularly, to a wireless event notification system with voice-based interaction capability.

Internet of Things (IoT) is enabling new and innovative solutions for wireless event notification systems such as security systems. One feature of the security system may be a panel-less system where the logic typically found in a local, hardwired, controller, may now be hosted in a cloud. In such systems, a user smartphone may be the primary interface with the security system. In this way, the system becomes ubiquitous, and may be accessible, generally, everywhere, and not only through an onsite physical interaction. Unfortunately, this newer approach is not always user friendly and other drawbacks may exist relative to security and private communications.

US 7 529 677 B1 discloses a technique for remotely processing a local audio command to control a local device.

### SUMMARY

A wireless event notification system according to one, non-limiting, embodiment of the present disclosure includes a microphone configured to transmit a voice command initiated by a user; a first controller configured to receive an audible command associated with the voice command; a voice authentication engine configured to receive the audible command from the first controller for authenticating the user, and send an authentication signal to the first controller; a speech recognition engine configured to receive the audible command from the first controller for the recognition of the command, and send a command text indicative of the audible command to the first controller; a second controller located in a cloud and configured to receive from the first controller an authentication signal and a text command associated with the voice command; a wireless device configured to receive the command text from the second controller if the second controller has received both the authentication signal and the command text from the first controller; wherein the microphone is part of a mobile application and the first controller is located in the mobile application.

Optionally, the mobile application is a smart phone.

In the alternative or additionally thereto, in the foregoing embodiment, the wireless event notification system includes a gateway configured to receive the command text from the second controller and send to the wireless device.

In the alternative or additionally thereto, in the foregoing embodiment, the wireless device is an Internet of Things (IoT) device.

In the alternative or additionally thereto, in the foregoing embodiment, the wireless device is a passive infrared camera (PirCAM).

In the alternative or additionally thereto, in the foregoing embodiment, the first controller is configured to receive the authentication signal before sending the audible command to the speech recognition engine.

In the alternative or additionally thereto, in the foregoing embodiment, the wireless event notification includes a user interface configured to communicate with the first controller and output a communication to the user to facilitate user identification.

In the alternative or additionally thereto, in the foregoing embodiment, the user interface and the microphone are part of a smart phone.

In the alternative or additionally thereto, in the foregoing embodiment, the speech recognition engine includes a storage medium having at least one preprogrammed audible command for comparison to the audible command.

A method of operating a wireless event notification system according to another, non-limiting, embodiment includes delivering a voice command by a user into a microphone, wherein the microphone is part of a mobile application; sending an audible command associated with the voice command to a first controller located in the mobile application; sending the audible command by the first controller to a voice identification engine; authenticating a voice of the user by the voice identification engine; confirming authentication with the first controller; sending the audible command by the first controller to a speech recognition engine; identifying the audible command by the speech recognition engine; sending a command text associated with the audible command from the speech recognition engine to the first controller; sending an authentication signal and the command text to a second controller located in a cloud; and sending the command text from the second controller and to a wireless device.

Additionally to the foregoing embodiment, the voice identification engine and the speech recognition engine are part of the cloud.

In the alternative or additionally thereto, in the foregoing embodiment, the method includes delivering a confirmation communication from a user interface in communication with the first controller and to the user.

In the alternative or additionally thereto, in the foregoing embodiment, the microphone and the user interface are part of a smartphone.

In the alternative or additionally thereto, in the foregoing embodiment, the user interface is part of the wireless device, and the second controller is a virtual control panel.

In the alternative or additionally thereto, in the foregoing embodiment, the command text sent from the second controller to the wireless device is performed through a router, and the wireless device is a PSM device.

The foregoing features and elements may be combined in various combinations without exclusivity, unless expressly indicated otherwise. These features and elements as well as the operation thereof will become more apparent in light of the following description and the accompanying drawings. However, it should be understood that the following description and drawings are intended to be exemplary in nature and non-limiting.

### BRIEF DESCRIPTION OF THE DRAWINGS

Various features will become apparent to those skilled in the art from the following detailed description of the disclosed non-limiting embodiments. The drawings that accompany the detailed description can be briefly described as follows:
FIG. 1 is a schematic of a wireless event notification system as one, non-limiting, exemplary embodiment of the present disclosure; and
FIG. 2 is a flow chart of a method of operating the wireless event notification system not according to the claimed invention.

### DETAILED DESCRIPTION

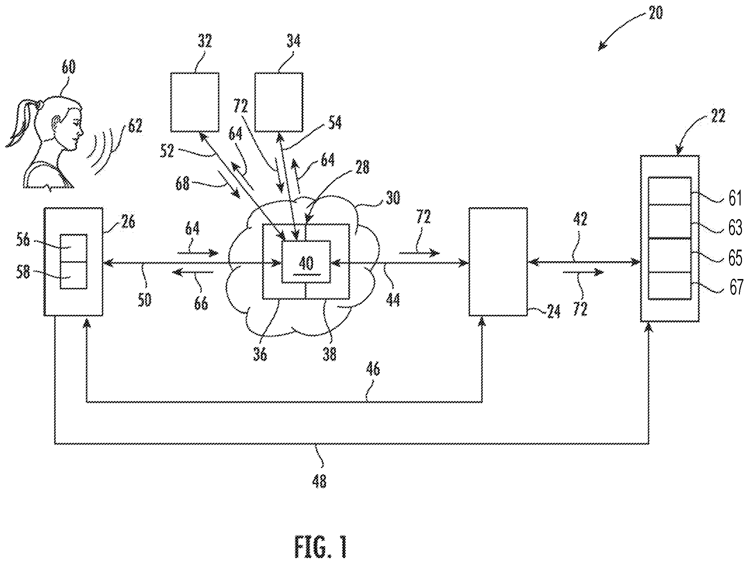

Referring to FIG. 1, an exemplary embodiment of a wireless event notification system 20 is illustrated, and may include a wireless device 22, a gateway 24 (e.g., an Access Point (AP) device indicative of Wi-Fi), a user application 26, a computing server 28 that may be in a cloud 30, a voice identification engine 32, and a speech recognition engine 34. The cloud server 28 may include a processor 36 and a computer writeable and readable storage medium 38 that may support a controller 40 (e.g., virtual control panel) of the wireless event notification system 20. The wireless device 22 and the AP device 24 may be configured to communicate with one-another over a wireless pathway (see arrow 42). The AP device 24 and the virtual control panel 40 may be configured to communicate with one-another over a pathway (see arrow 44) that may be wireless (e.g., 3G access point), may be fiber optics, and/or may be wired. The user application 26 and the wireless device 22 may be configured to communicate with one-another through the AP device 24, and over pathways (see arrows 46 and 42) that may be wireless. Furthermore, the user application 26 may be configured to communicate with the wireless device 22 over a wireless pathway (see arrow 48). The virtual control panel 40 and the user application 26 may be configured to communicate with one-another over a pathway (see arrow 50) that may be wireless. It is understood that the term "gateway" is treated broadly and is indicative of more than just Wi-Fi communications. For example, the gateway may support ZWave.

As illustrated, and in a non-limiting example where the voice identification engine 32 and the speech recognition engine 34 are separate from the cloud server 28, the virtual control panel 40 and the engines 32, 34 may communicate with one-another over respective pathways (see arrows 52, 54) that may be wireless. In one embodiment, the engines 32, 34 may be supported by any cloud computing platform and may be software-based. In one embodiment, the engines 32, 34 may be supported by the cloud server 28, thus communication pathways 52, 54 may generally be eliminated.

In one embodiment, the wireless event notification system 20 may be a security system, and the wireless device 22 may be a passive infra-red camera (PirCAM) device configured to communicate with the cloud server 28 through the AP device 24. In one embodiment, the wireless device 22 may be configured to operate in a Wi-Fi Power Save Mode (PSM), may be an Internet of Things (IoT) device, and/or may be a smart device. Non-limiting examples of the wireless device 22, may include smart home sensors, intrusion sensors configured to detect the opening of windows or doors, thermal sensors configured to measure the temperature of ambient air, gas sensors configured to detect the presence of gases, smoke detectors as part of a safety system, and many other types of devices that may utilize batteries and may communicate wirelessly. In one embodiment, the AP device 24 may be a router having firmware that supports Wi-Fi PSM. The user application 26 is a mobile application, and may further be a smart phone. Other non-limiting examples of a mobile application 26 may include a digital media player and a tablet computer.

In one embodiment according to the claimed invention, the user application 26 includes a microphone 56 and may include a user interface 58. In operation, a user 60 may speak, initiating a voice command 62 that is received by the microphone 56 of the user application 26 and sent as an audible command (see arrow 64) over pathway 50 to the virtual control panel 40. As part of the user identification process, the virtual control panel 40 may be configured to send a communication (see arrow 66) over pathway 50 to the user interface 58. The communication 66 may be audible and/or visual. In one embodiment, the user interface may include a speaker that may be part of the microphone 56 for audibly communicating the communication. In another, non-limiting, embodiment, the user interface 58 may be a visual screen that may be interactive.

The wireless device 22 may include a power management module 61 (i.e., battery and a means of managing battery power), a sensor and/or actuator 63, a computing processor 65 (e.g., microcontroller), and a wireless transceiver 67. If the wireless device 22 is a PSM device, the wireless device 22 may be configured to enter into sleep and awake states at a pre-determined frequency and duration of time.

The voice identification engine 32 is configured to receive the audible command 64 from the virtual control panel 40, authenticate the user 60, and once authenticated, send an authentication signal (see arrow 68) to the virtual control panel 40. Authentication may be facilitated by comparing the voice (i.e., audible command 64) against prerecorded/trained voice patterns generated by allowed users of the system 20. The trained voice patterns may generally be stored by the engine 32. In another embodiment according to the claimed invention, the audible command 64 is sent directly from the user application 26 to the voice identification engine 32. One, non-limiting, example of the voice identification engine 32 may be based on Microsoft Cognitive Services.

The speech recognition engine 34 is configured to receive the audible command 64 from the virtual control panel 40, recognize the command, and once recognized, send a command text (see arrow 72) to the virtual control panel 40. Recognition of the audible command 64 may be facilitated by a comparison to allowed commands stored by the engine 34. In other embodiments according to the claimed invention, the audible command 64 is sent directly from the user application 26, or in embodiments not according to the claimed invention directly from the voice identification engine 32. Non-limiting examples of the speech recognition engine 34 may be based on the speech recognition services from Google Cloud Platform or Microsoft Azure.

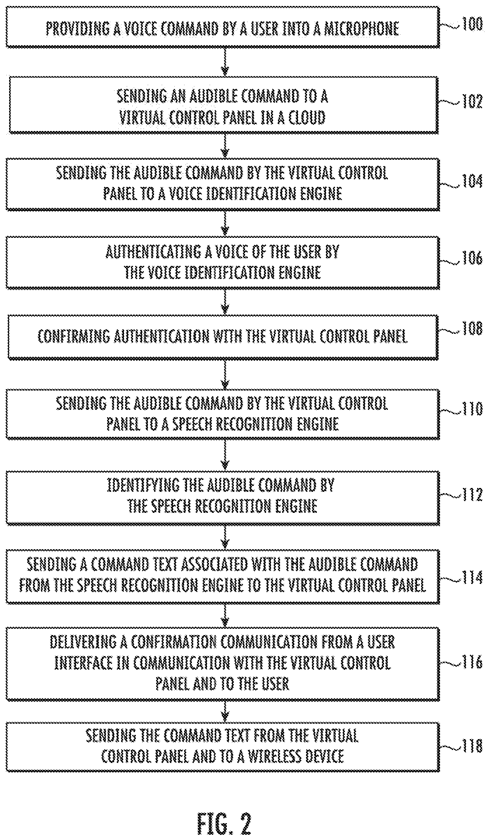

Referring to FIG. 2, a method operating an event notification system 20 is illustrated. At block 100, a voice command 62 is audibly made by a user 60 into a microphone 56. At block 102, an audible command 64, associated with the voice command 62, is sent to a virtual control panel 40 that may be in a cloud 30. At block 104, the audible command 64 is sent by the virtual control panel 40 to a voice identification engine 32. At block 106, the voice identification engine 32 authenticates the audible command 64.

At block 108, the voice identification engine 32 confirms the authentication by sending an authentication signal 68 to the virtual control panel 40 over pathway 52. At block 110, the audible command 64 is sent from the virtual control panel 40 to the speech recognition engine 34 over pathway 54. At block 112, the speech recognition engine 34 identifies the audible command 64. At block 114, the speech recognition engine 34 sends a command text (see arrow 72), indicative of identification of the audible command 64, over pathway 54 to the virtual control panel 40. At block 116, the virtual control panel 40 may send a communication 66 over pathway 50 to the user application 26. The communication 66 may be indicative of failure or success regarding the voice identification and recognition, and/or may request confirmation or other actions from the user 60. At block 118, the command text 72 may be sent from the virtual control panel 40 and to the AP device 24 over pathway 44, then to the wireless device 118 over pathway 42. Once received, the wireless device 22 may act accordingly. In one embodiment, the command text 72 may include an enable or arm system command, and may include a disable or disarm system command.

In other, non-limiting, embodiments according to the claimed invention, the mobile application sends the voice command to the authentication engine, authenticates the user (i.e., receives a key), sends the voice command to the speech recognition engine, and receives the text message. The mobile application then sends to the controller in the cloud the key and the text message. The controller 40 in the cloud may validate the authentication and then forwards the text message to the wireless device 22.

Advantages and benefits of the present disclosure include a robust and user friendly method to implement user identification for event notification systems through, for example, a smart phone. Other benefits include obviating the need for more traditional pin codes and/or fingerprint approached, reducing cost, and improving maintainability of event notification systems.

The various functions described above may be implemented or supported by a computer program that is formed from computer readable program codes, and that is embodied or stored in a computer readable storage medium. Computer readable program codes may include source codes, object codes, executable codes, and others. Computer readable mediums may be any type of media capable of being accessed by a computer, and may include Read Only Memory (ROM), Random Access Memory (RAM), a hard disk drive, a compact disc (CD), a digital video disc (DVD), or other forms.

Terms used herein such as component, module, system, and the like are intended to refer to a computer-related entity, either hardware, a combination of hardware and software, or software execution. By way of example, a component may be, but is not limited to, a process running on a processor, a processor, an object, an executable, a thread of execution, a program, and/or a computer. It is understood that an application running on a server and the server may be a component. One or more components may reside within a process and/or thread of execution and a component may be localized on one computer and/or distributed between two or more computers.

While the present disclosure is described with reference to exemplary embodiments, it will be understood by those skilled in the art that various changes may be made without departing from the scope of the present invention, as defined by the claims. In addition, various modifications may be applied to adapt the teachings of the present disclosure to particular situations, applications, and/or materials. The present invention is thus not limited to the particular examples disclosed herein, but includes all embodiments falling within the scope of the appended claims.

## Claims

1. A wireless event notification system (20) comprising:
a microphone (56) configured to transmit a voice command (62) initiated by a user;
a first controller configured to receive an audible command (64) associated with the voice command (62);
a voice authentication engine (32) configured to receive the audible command (64) from the first controller for authenticating the user, and send an authentication signal (68) to the first controller;
a speech recognition engine (34) configured to receive the audible command (64) from the first controller for the recognition of the command, and send a command text (72) indicative of the audible command to the first controller;
a second controller (28) located in a cloud and configured to receive from the first controller an authentication signal (68) and a text command (72) associated with the voice command (62);
a wireless device (22) configured to receive the command text (72) from the second controller (28) if the second controller has received both the authentication signal (68) and the command text (72) from the first controller;
wherein the microphone (56) is part of a mobile application (26); and
the first controller is located in the mobile application (26).

2. The wireless event notification system (20) set forth in claim 1, wherein the mobile application (26) is a smart phone.

3. The wireless event notification system (20) set forth in claim 1, further comprising:
a gateway (24) configured to receive the command text (72) from the second controller (28) and send to the wireless device (22).

4. The wireless event notification system (20) set forth in claim 3, wherein the wireless device (22) is an Internet of Things (IoT) device.

5. The wireless event notification system (20) set forth in claim 1, wherein the wireless device (22) is a passive infrared camera (PirCAM).

6. The wireless event notification system (20) set forth in claim 1, wherein the first controller is configured to receive the authentication signal (68) before sending the audible command (64) to the speech recognition engine (34).

7. The wireless event notification system (20) set forth in claim 1 further comprising:
a user interface (58) configured to communicate with the first controller and output a communication to the user to facilitate user identification.

8. The wireless event notification system (20) set forth in claim 7, wherein the user interface (58) and the microphone (56) are part of a smart phone.

9. The wireless event notification system (20) set forth in claim 1, wherein the speech recognition engine (34) includes a storage medium having at least one preprogrammed audible command for comparison to the audible command (64).

10. A method of operating a wireless event notification system comprising:
delivering a voice command (62) by a user into a microphone (56), wherein the microphone is part of a mobile application (26);
sending an audible command (64) associated with the voice command (62) to a first controller located in the mobile application (26);
sending the audible command (64) by the first controller to a voice identification engine (32);
authenticating a voice of the user by the voice identification engine (32);
confirming authentication with the first controller;
sending the audible command (64) by the first controller to a speech recognition engine (34);
identifying the audible command (64) by the speech recognition engine (34);
sending a command text (72) associated with the audible command (64) from the speech recognition engine (34) to the first controller;
sending an authentication signal (68) and the command text (72) to a second controller (28) located in a cloud; and
sending the command text (72) from the second controller (28) and to a wireless device (22).

11. The method set forth in claim 10, wherein the voice identification engine (32) and the speech recognition engine (34) are part of the cloud.

12. The method set forth in claim 10, further comprising:
delivering a confirmation communication from a user interface (58) in communication with the first controller and to the user.

13. The method set forth in claim 12, wherein the microphone (56) and the user interface (58) are part of a smartphone.

14. The method set forth in claim 12, wherein the user interface (58) is part of the wireless device (22), and the second controller (28) is a virtual control panel.

15. The method set forth in claim 12, wherein the command text (72) sent from the second controller (28) to the wireless device (22) is performed through a router, and the wireless device is a PSM device.

## Patentansprüche

1. System (20) zur Meldung von Drahtlosereignissen, Folgendes umfassend:
ein Mikrofon (56), das konfiguriert ist, um einen von einem Benutzer initiierten Sprachbefehl (62) zu übertragen;
eine erste Steuerung, die konfiguriert ist, um einen hörbaren Befehl (64) zu empfangen, der dem Sprachbefehl (62) zugeordnet ist;
eine Sprachauthentifizierungsmaschine (32), die konfiguriert ist, um den hörbaren Befehl (64) aus der ersten Steuerung zum Authentifizieren des Benutzers zu empfangen und ein Authentifizierungssignal (68) an die erste Steuerung zu senden;
eine Sprecherkennungsmaschine (34), die konfiguriert ist, um den hörbaren Befehl (64) aus der ersten Steuerung für die Erkennung des Befehls zu empfangen und einen Befehlstext (72), der den hörbaren Befehl anzeigt, an die erste Steuerung zu senden;
eine zweite Steuerung (28), die sich in einer Cloud befindet und konfiguriert ist, um aus der ersten Steuerung ein Authentifizierungssignal (68) und einen Textbefehl (72) zu empfangen, der dem Sprachbefehl (62) zugeordnet ist;
eine drahtlose Vorrichtung (22), die konfiguriert ist, um den Befehlstext (72) aus der zweiten Steuerung (28) zu empfangen, wenn die zweite Steuerung sowohl das Authentifizierungssignal (68) als auch den Befehlstext (72) aus der ersten Steuerung empfangen hat;
wobei das Mikrofon (56) Teil einer mobilen Anwendung (26) ist; und
sich die erste Steuerung in der mobilen Anwendung (26) befindet.

2. System (20) zur Meldung von Drahtlosereignissen nach Anspruch 1, wobei die mobile Anwendung (26) ein Smartphone ist.

3. System (20) zur Meldung von Drahtlosereignissen nach Anspruch 1, ferner Folgendes umfassend:
ein Gateway (24), das konfiguriert ist, um den Befehlstext (72) aus der zweiten Steuerung (28) zu empfangen und an die drahtlose Vorrichtung (22) zu senden.

4. System (20) zur Meldung von Drahtlosereignissen nach Anspruch 3, wobei die drahtlose Vorrichtung (22) eine Internet der Dinge (IoT)-Vorrichtung ist.

5. System (20) zur Meldung von Drahtlosereignissen nach Anspruch 1, wobei die drahtlose Vorrichtung (22) eine passive Infrarotkamera (PirCAM) ist.

6. System (20) zur Meldung von Drahtlosereignissen nach Anspruch 1, wobei die erste Steuerung konfiguriert ist, um das Authentifizierungssignal (68) zu empfangen, bevor der hörbare Befehl (64) an die Sprecherkennungsmaschine (34) gesendet wird.

7. System (20) zur Meldung von Drahtlosereignissen nach Anspruch 1, ferner Folgendes umfassend:
eine Benutzerschnittstelle (58), die konfiguriert ist, um mit der ersten Steuerung zu kommunizieren und eine Mitteilung an den Benutzer auszugeben, um die Benutzeridentifizierung zu erleichtern.

8. System (20) zur Meldung von Drahtlosereignissen nach Anspruch 7, wobei die Benutzerschnittstelle (58) und das Mikrofon (56) Teil eines Smartphones sind.

9. System (20) zur Meldung von Drahtlosereignissen nach Anspruch 1, wobei die Sprecherkennungsmaschine (34) ein Speichermedium beinhaltet, das mindestens einen vorprogrammierten hörbaren Befehl zum Vergleich mit dem hörbaren Befehl (64) aufweist.

10. Verfahren zum Betreiben eines Systems zur Meldung von Drahtlosereignissen, Folgendes umfassend:
Abgeben eines Sprachbefehls (62) durch einen Benutzer in ein Mikrofon (56), wobei das Mikrofon Teil einer mobilen Anwendung (26) ist;
Senden eines dem Sprachbefehl (62) zugeordneten hörbaren Befehls (64) an eine erste Steuerung, die sich in der mobilen Anwendung (26) befindet;
Senden des hörbaren Befehls (64) durch die erste Steuerung an eine Sprachidentifizierungsmaschine (32);
Authentifizieren einer Sprache des Benutzers durch die Sprachidentifizierungsmaschine (32);
Bestätigen der Authentifizierung mit der ersten Steuerung;
Senden des hörbaren Befehls (64) durch die erste Steuerung an eine Sprecherkennungsmaschine (34);
Identifizieren des hörbaren Befehls (64) durch die Sprecherkennungsmaschine (34);
Senden eines dem hörbaren Befehl (64) zugeordneten Befehlstextes (72) von der Sprecherkennungsmaschine (34) an die erste Steuerung;
Senden eines Authentifizierungssignals (68) und des Befehlstextes (72) an eine zweite Steuerung (28), die sich in einer Cloud befindet; und
Senden des Befehlstextes (72) von der zweiten Steuerung (28) und an eine drahtlose Vorrichtung (22).

11. Verfahren nach Anspruch 10, wobei die Sprachidentifizierungsmaschine (32) und die Sprecherkennungsmaschine (34) Teil der Cloud sind.

12. Verfahren nach Anspruch 10, ferner Folgendes umfassend:
Abgeben einer Bestätigungsmitteilung von einer Benutzerschnittstelle (58) in Kommunikation mit der ersten Steuerung und an den Benutzer.

13. Verfahren nach Anspruch 12, wobei das Mikrofon (56) und die Benutzerschnittstelle (58) Teil eines Smartphones sind.

14. Verfahren nach Anspruch 12, wobei die Benutzerschnittstelle (58) Teil der drahtlosen Vorrichtung (22) ist und die zweite Steuerung (28) ein virtuelles Bedienfeld ist.

15. Verfahren nach Anspruch 12, wobei der Befehlstext (72), der von der zweiten Steuerung (28) an die drahtlose Vorrichtung (22) gesendet wird, durch einen Router ausgeführt wird, und die drahtlose Vorrichtung eine PSM-Vorrichtung ist.

## Revendications

1. Système de notification d'événement sans fil (20) comprenant :
un microphone (56) configuré pour transmettre une commande vocale (62) initiée par un utilisateur ;
un premier dispositif de commande configuré pour recevoir une commande sonore (64) associée à la commande vocale (62) ;
un moteur d'authentification vocale (32) configuré pour recevoir la commande sonore (64) du premier dispositif de commande pour authentifier l'utilisateur, et envoyer un signal d'authentification (68) au premier dispositif de commande ;
un moteur de reconnaissance vocale (34) configuré pour recevoir la commande sonore (64) en provenance du premier dispositif de commande pour la reconnaissance de la commande, et envoyer un texte de commande (72) indicatif de la commande audible au premier dispositif de commande ;
un second dispositif de commande (28) situé dans un nuage et configuré pour recevoir du premier dispositif de commande un signal d'authentification (68) et une commande de texte (72) associée à la commande vocale (62) ;
un dispositif sans fil (22) configuré pour recevoir le texte de commande (72) du second dispositif de commande (28) si le second dispositif de commande a reçu à la fois le signal d'authentification (68) et le texte de commande (72) du premier dispositif de commande ;
dans lequel le microphone (56) fait partie d'une application mobile (26) ; et
le premier dispositif de commande est situé dans l'application mobile (26).

2. Système de notification d'événement sans fil (20) selon la revendication 1, dans lequel l'application mobile (26) est un téléphone intelligent.

3. Système de notification d'événement sans fil (20) selon la revendication 1, comprenant également :
une passerelle (24) configurée pour recevoir le texte de commande (72) en provenance du second dispositif de commande (28) et envoyer au dispositif sans fil (22).

4. Système de notification d'événement sans fil (20) selon la revendication 3, dans lequel le dispositif sans fil (22) est un dispositif de l'Internet des objets (IdO).

5. Système de notification d'événement sans fil (20) selon la revendication 1, dans lequel le dispositif sans fil (22) est une caméra infrarouge passive (PirCAM).

6. Système de notification d'événement sans fil (20) selon la revendication 1, dans lequel le premier dispositif de commande est configuré pour recevoir le signal d'authentification (68) avant d'envoyer la commande sonore (64) au moteur de reconnaissance vocale (34).

7. Système de notification d'événement sans fil (20) selon la revendication 1, comprenant également :
une interface utilisateur (58) configurée pour communiquer avec le premier dispositif de commande et délivrer une communication à l'utilisateur pour faciliter l'identification de l'utilisateur.

8. Système de notification d'événement sans fil (20) selon la revendication 7, dans lequel l'interface utilisateur (58) et le microphone (56) font partie d'un téléphone intelligent.

9. Système de notification d'événement sans fil (20) selon la revendication 1, dans lequel le moteur de reconnaissance vocale (34) comporte un support de stockage ayant au moins une commande sonore préprogrammée pour comparaison avec la commande sonore (64).

10. Procédé de fonctionnement d'un système de notification d'événement sans fil comprenant :
la délivrance d'une commande vocale (62) par un utilisateur dans un microphone (56), dans lequel le microphone fait partie d'une application mobile (26) ;
l'envoi d'une commande sonore (64) associée à la commande vocale (62) à un premier dispositif de commande situé dans l'application mobile (26) ;
l'envoi de la commande sonore (64) par le premier dispositif de commande à un moteur d'identification vocale (32) ;
l'authentification d'une voix de l'utilisateur par le moteur d'identification vocale (32) ;
la confirmation de l'authentification auprès du premier dispositif de commande ;
l'envoi de la commande sonore (64) par le premier dispositif de commande à un moteur de reconnaissance vocale (34) ;
l'identification de la commande sonore (64) par le moteur de reconnaissance vocale (34) ;
l'envoi d'un texte de commande (72) associé à la commande sonore (64) du moteur de reconnaissance vocale (34) au premier dispositif de commande ;
l'envoi d'un signal d'authentification (68) et du texte de commande (72) à un second dispositif de commande (28) situé dans un nuage ; et
l'envoi du texte de commande (72) du second dispositif de commande (28) et à un dispositif sans fil (22).

11. Procédé selon la revendication 10, dans lequel le moteur d'identification vocale (32) et le moteur de reconnaissance vocale (34) font partie du nuage.

12. Procédé selon la revendication 10, comprenant également : la délivrance d'une communication de confirmation à partir d'une interface utilisateur (58) en communication avec le premier dispositif de commande et avec l'utilisateur.

13. Procédé selon la revendication 12, dans lequel le microphone (56) et l'interface utilisateur (58) font partie d'un téléphone intelligent.

14. Procédé selon la revendication 12, dans lequel l'interface utilisateur (58) fait partie du dispositif sans fil (22), et le second dispositif de commande (28) est un panneau de commande virtuel.

15. Procédé selon la revendication 12, dans lequel le texte de commande (72) envoyé par le second dispositif de commande (28) au dispositif sans fil (22) est réalisé par l'intermédiaire d'un routeur, et dans lequel le dispositif sans fil est un dispositif PSM.
